# EUROPÄISCHE PATENTSCHRIFT

(11) **EP 1 508 228 B1**
(45) Veröffentlichungstag und Bekanntmachung des Hinweises auf die Patenterteilung: **24.02.2010**
(21) Anmeldenummer: 03729880.9
(22) Anmeldetag: 09.05.2003
(51) Int. Cl.: H04L 12/58, H04W 4/12

(54) **Verfahren und Vorrichtungen zur Nachrichtenübertragung**
Method and devices for message transmission
Procédé et dispositifs pour la transmission de messages

(30) Priorität: 24.05.2002 DE 10223205
(43) Veröffentlichungstag der Anmeldung: 23.02.2005
(73) Patentinhaber: Gigaset Communications GmbH, 81379 München (DE)
(72) Erfinder: WOJZISCHKE, Christoph, 38116 Braunschweig (DE); PRENZEL, Ralf, 38259 Salzgitter (DE); JERBI, Belhassen, 85551 Kirchheim (DE); TRAUBERG, Markus, 38159 Velchede (DE); SCHMIDT, Andreas, 38124 Braunschweig (DE)
(74) Vertreter: Michalski Hüttermann & Partner Patentanwälte
(86) Internationale Anmeldenummer: PCT/DE2003/001497
(87) Internationale Veröffentlichungsnummer: WO 2003/101054

(56) Entgegenhaltungen:
- WO-A-03/040898
- WO-A-03/043360
- "Digital cellular telecommunications system (Phase 2+) (GSM);Universal Mobile Telecommunications System (UMTS);Multimedia Messaging Service (MMS); Functional description; Stage 2 (3GPP TS 23.140 version 4.6.0 Release 4)" ETSI TS 123 140 V4.6.0, XX, XX, Bd. V7.1.0, März 2002 (2002-03), Seiten 1-76, XP002224103
- WAP FORUM: "Wireless Application Protocol; MMS Encapsulation Protocol" INTERNET ARTICLE, [Online] 5. Januar 2002 (2002-01-05), Seiten 1-39, XP002259195 Gefunden im Internet: <URL:http://www1.wapforum.org/tech/documen ts/WAP-209-MMSEncapsulation-20020105-a.pdf > [gefunden am 2003-10-22] in der Anmeldung erwähnt

## Beschreibung

Die vorliegende Erfindung betrifft ein Verfahren zur Übertragung von Daten nach dem Oberbegriff von Anspruch 1, eine Sende- und/oder Empfangseinheit, ein Computerprogrammerzeugnis und ein Kommunikationssystem. Dabei wird unter dem Begriff der Daten im Rahmen der vorliegenden Erfindung auch jede Art von Information verstanden, die aus einzelnen Bestandteilen zusammengesetzt ist. Diese einzelnen Bestandteile oder Elemente können dabei nach unterschiedlichen Standards aufgebaut, organisiert und/oder codiert sein. Demnach können in diesem Sinne Daten auch eine multimediale Nachricht darstellen, die diverse Elemente verschiedener Standards umfasst.

Verfahren und Vorrichtungen zur Übertragung verschiedener Formen oder Formate von Daten sind bekannt. Ein Mobilfunksystem nach dem Global System for Mobile Communications Standard, kurz GSM, bietet beispielsweise neben der Sprachtelephonie schon aktuell auch die Möglichkeit, Information in Form kurzer Textnachrichten von bis zu 160 Zeichen Länge zu versenden bzw. zu empfangen. Dieser Dienst wird als Short Message Service bezeichnet, kurz SMS.

Für das Mobilfunksystem der nächsten Generation, das Universal Mobile Telecommunication System UMTS, wird zur Zeit eine multimediafähige Variante eines mobilen Nachrichtendienstes standardisiert, der so genannte Multimedia Messaging Service MMS. Der Multimedia Messaging Service spezifiziert Mechanismen zum Transport beliebiger Inhalte von einem Teilnehmer des Service über ein Netzwerk zu einem anderen Teilnehmer.

Informationen als Nachrichten mit multimedialen Inhalten werden im folgenden zur besseren Abgrenzung von den Textnachrichten des SMS nur noch als Multimedia Message bezeichnet, kurz MM. Im Gegensatz zu dem SMS entfällt bei dem Multimedia Messaging Service MMS die Beschränkung auf reine Textinhalte. In einem Multimedia Messaging Service MMS wird es auch möglich sein, Texte dem individuellen Geschmack entsprechend zu formatieren, sowie beliebige Inhalte in eine Nachricht einzubetten. Dazu zählen z.B. Audio- und Videoinhalte, Standbilder, Grafiken, Texte, u.a.. Die nachfolgend offenbarte Lehre bezieht sich generell auf Datenmengen, die aus einzelnen Elementen von Text- und/oder Bilddaten mit oder ohne Ton zusammengesetzt und jeweils nach gleichen oder unterschiedlichen Standards codiert sind, auch wenn in Anwendungen nach dem vorstehend genannten Standard ein wesentliches Einsatzfeld für die vorliegende Erfindung zu sehen ist.

Die bisherige Spezifikation des Multimedia Messaging Service MMS basiert auf zwei Spezifikationen des 3rd Generation Partnership Projekt 3GPP, die zum einen den Dienst grundsätzlich beschreiben [1] und zum anderen die konkrete Funktionalität abstrakt festlegen [2], [7]. Eine mögliche Realisierung von MMS wird in drei Spezifikationen des WAP-Forums beschrieben [3, 4, 5]. Nach dem Stand der Technik ist eine Implementierung von MMS über das Wireless Application Protocol WAP realisierbar. Zur Überbrückung der Luftschnittstelle zwischen einem MMS-tauglichen Endgerät und dem WAP Gateway auf der Netzwerkseite ist nach [5] die Benutzung des WAP Wireless Session Protocol WSP [6] vorgesehen.

Der vorliegenden Erfindung liegt die Aufgabe zugrunde, ein Verfahren, eine Sende- und/oder Empfangseinheit, ein Computerprogrammerzeugnis und ein Kommunikationssystem vorzuschlagen, das einem Absender von Daten bzw. einer Nachricht zusätzliche Möglichkeiten zur Datenversendung bei einem höheren Grad von Flexibilität zur Anpassung eines gegebenen Kommunikationssystems bei verbessertem Wirkungsgrad des Nachrichtenflusses bzw. besserer Ausnutzung einer Kapazität eines jeweiligen Übertragungskanals gibt.

Diese Aufgabe wird erfindungsgemäß durch ein Verfahren mit den Merkmalen des Anspruchs 1 und eine Sende-MMS-Verbindungs-, bzw. Empfangseinheit mit den Merkmalen der Ansprüche 15, 16, bzw. 17 gelöst. Ferner sind ein Computerprogrammerzeugnis nach Anspruch 20 und ein Kommunikationssystem mit den Merkmalen von Anspruch 22 jeweils eine Lösung dieser Aufgabe. Die Unteransprüche definieren jeweils bevorzugte und vorteilhafte Ausführungsformen der vorliegenden Erfindung.

Ein erfindungsgemäßes Verfahren zur Übertragung von Daten in einem Kommunikationssystem, insbesondere zur Übertragung von Text- und/oder Bilddaten mit oder ohne Ton, bei dem eine zu übermittelnden Datenmenge aus einzelnen Elementen zusammengesetzt wird, die jeweils nach gleichen oder unterschiedlichen Standards codiert werden, zeichnet sich erfindungsgemäß dadurch aus, dass eine Kennzeichnung zur Festlegung einer Auswahl aus mehreren Varianten der Zustellung einer Nachricht vorgenommen wird. Damit ist erfindungsgemäß möglich, Varianten einer jeweiligen Zustellung von der Art und/oder Länge und sonstigen Eigenschaften einer Nachricht abhängig zu machen.

In einer Ausbildung der Erfindung kann die Variante der Zustellung und eine Absender und/oder auch von der MMS- Verbindungseinheit insbesondere in Abhängigkeit davon gewählt werden, ob der Empfänger in seinem Heimatnetz eingebucht ist oder in einem anderen als dem Heimatnetzwerk eingebucht ist. Dieser Betriebsfall wird auch als "Roaming" bezeichnet. Darüber können die Kosten für den Datenverkehr im fremden Netzwerk besser kontrolliert werden. Außerdem kann diese oder eine andere der neu vorgesehenen Varianten der Zustellung auch von der MMS-Verbindungseinheit in Abhängigkeit von dem Nutzerpräferenzen bzw. eines Nutzerprofils und/oder den Eigenschaften des Teilnehmer-Endgerätes und der MMS- Nutzerapplikation auf dem Teilnehmer-Endgerät gewählt werden.

In einer Weiterbildung der Erfindung werden die Daten zum Versand derart aufbereitet, dass sie einen Header zum Transport von Organisationsinformationen und einen Body zum Transport einer jeweiligen Nutzinformation umfassen. Die Nutzinformation umfasst dabei vorzugsweise Elemente in Form mehrerer Datenpakete. Vorteilhafterweise wird zur Übertragung von Daten von einer Nutzerapplikation eines Teilnehmers über ein Netzwerk zu einer Nutzerapplikation eines anderen Teilnehmers, bei dem die Übertragung durch Transaktionen und/oder den Daten zugefügte Informationselemente eines Transportprotokolls gesteuert, wobei die Informationselemente einen Feld-Namen und einen jeweiligen Feldwert umfassen. Dabei wird ein erfindungsgemäßes Verfahren vorzugsweise für Daten eingesetzt, die als Multimedia Message MM in einem Multimedia Messaging Service MMS übertragen werden, insbesondere auf eine Sende- und/oder Empfangseinheit in Form eines mobilen Teilnehmer-Endgeräts oder speziell eines WAP-fähiges Mobiltelefons.

Bisher bietet gerade der Multimedia Messaging Service MMS als ein bevorzugtes Anwendungsfeld der vorliegenden Erfindung nur die Wahl zwischen der verzögerten Zustellung der Nachricht, dem sog. Deferred Retrieval, und der unverzüglichen Zustellung der Nachricht, dem sog. Immediate Retrieval. Die Wahlmöglichkeit zwischen den beiden Varianten liegt dabei ausschließlich bei einer jeweils empfangenden Nutzerapplikation bzw. Empfänger. Bisher sind damit explizit nicht möglich:
- eine von der sendenden Nutzerapplikation und/oder MMS-Verbindungseinheit veranlasste sofortige Zustellung,
- eine von der sendenden Nutzerapplikation und/oder MMS-Verbindungseinheit veranlasste direkte Zustellung der Nachricht mit der MMS- Empfängerbenachrichtigung, ohne dass anschließend eine MMS- Zustellnachricht versendet wird, wobei diese Nachricht optional mit oder ohne MMS-Zustellungsbestätigung realisierbar ist, und
- eine von der sendenden Nutzerapplikation und/oder MMS-Verbindungseinheit veranlasste MMS- Empfängerbenachrichtigung explizit ohne MMS-Empfängerbenachrichtigungsbestätigung.

Ein Anwendungsfall für diese drei erst durch eine Verwirklichung eines erfindungsgemäßen Verfahrens ermöglichten Zustellvarianten ist die Zustellung sehr kurzer Nachrichten, beispielsweise reiner Text-Nachrichten, für die die bisherigen Zustellvarianten sehr aufwendig wären. Eine weitere Anwendungsmöglichkeit ist der Versand eines Verweises auf Inhalte außerhalb von MMS mit der MMS- Empfängerbenachrichtigung. Hier ist keine Zustellung weiterer MMS-Inhalte mit der MMS-Zustellnachricht mehr notwendig.

Erfindungsgemäß wird hier nun die Möglichkeit geschaffen, durch eine sendende Applikation und/oder eine MMS Verbindungseinheit in definierter Art und Weise eine Art der Zustellung genau zu spezifizieren. Ein erfindungsgemäßes Verfahren kann dabei in jeder Sende- und/oder Empfangseinheit eines Kommunikationssystems eingesetzt werden, also beispielsweise einem RelayServer und/oder einem Teilnehmer-Endgerät. Neben der besonderen Art der Zustellung werden Ressourcen durch das Abkürzen oder Einsparen von Zustellnachrichten oder Empfangsbestätigungen geschont und damit die Effizienz der Übertragungskanäle erhöht, wie nachfolgend unter Bezug auf die Abbildung der Zeichnung anhand konkreter Beispiele im Detail beschrieben wird.

Die vorliegende Erfindung wird nachfolgend unter Bezugnahme auf die beigefügte Zeichnung anhand bevorzugter Ausführungsbeispiele erläutert. In der Zeichnung zeigen:
- Figur 1: eine schematische Abbildung von einer Datenübertra- gung zugeordneten Sendungen gemäß dem Wireless Appli- cation Protocol- bzw. WAP-Standard zwischen der Ebene eines Versenders und der eines Providers einerseits und der Ebene des Providers und der eines Empfängers andererseits als Signalflussdiagramm bzw. Transaction Flow Diagramm bei verzögerter Zustellung der Nach- richt;
- Figur 2: ein Signalflussdiagramm gemäß der Abbildung von Figur 1 für eine unverzögerte Zustellung der Nachricht;
- Figur 3: ein MMS Nachrichtenfluss-Diagramm in WAP nach der Quelle [4] zur Darstellung einer erfindungsgemäß neu eingeführten und durch einen Absender angeforderten forcierten Zustellung bzw. Forced Retrieval;
- Figur 4: ein MMS Nachrichtenfluss-Diagramm in WAP nach der Quelle [4] zur Darstellung einer erfindungsgemäß neu eingeführten Benachrichtigung ohne Zustellung mit einer durch den Absender angeforderten Bestätigung;
- Figur 5: ein MMS Nachrichtenfluss-Diagramm in WAP nach der Quelle [4] zur Darstellung einer erfindungsgemäß neu eingeführten Benachrichtigung ohne Zustellung ohne durch einen Absender angeforderte Bestätigung;
- Figur 6: ein MMS Nachrichtenfluss-Diagramm in WAP nach der Quelle [4] zur Darstellung einer erfindungsgemäß neu eingeführten Benachrichtigung ohne Bestätigung mit anschließender verzögerter Zustellung der Nachricht;
- Figur 7: eine Codierung des neuen Header-Feldes gemäß vorlie- gender Erfindung;
- Figur 8: eine Codierung des neuen Header-Feld-Namens gemäß vorliegender Erfindung im Zusammenstellung mit be- reits im Standard definierten Header-Feld-Namen;
- Figur 9: eine Auflistung der Header-Felder der WAP Message M- Send.req in tabellarischer Darstellung und
- Figur 10: eine Darstellung der Inhalte der MMS-Nachricht bzw. WAP Message M-Notification.ind nach der Quelle [2] 6.2.

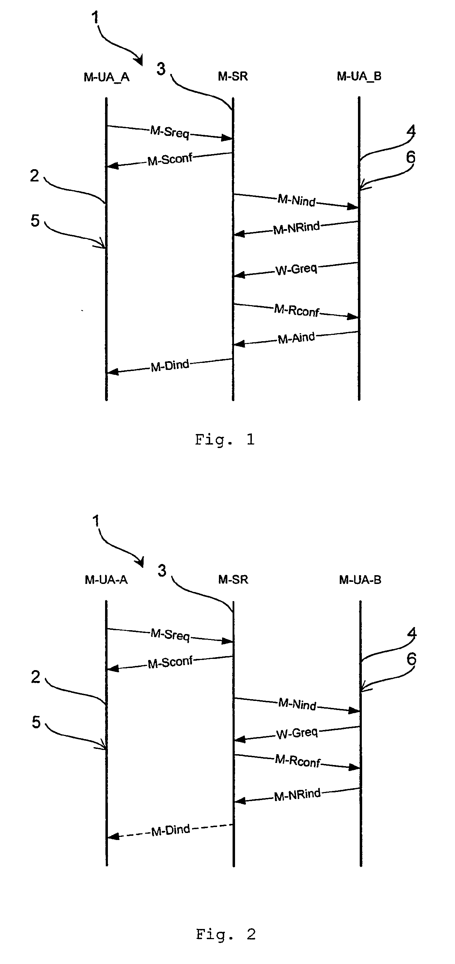

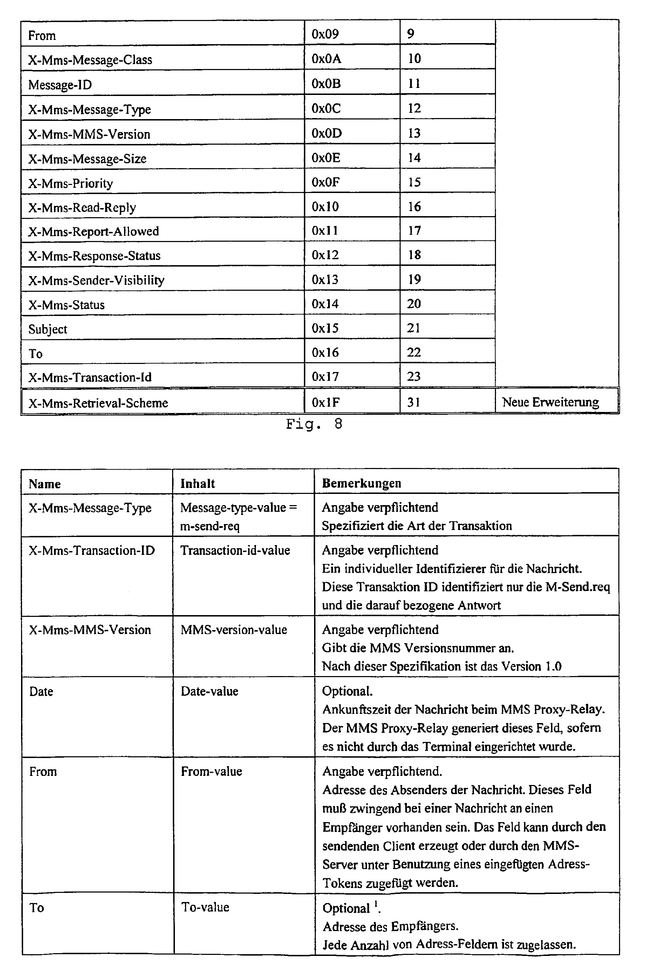

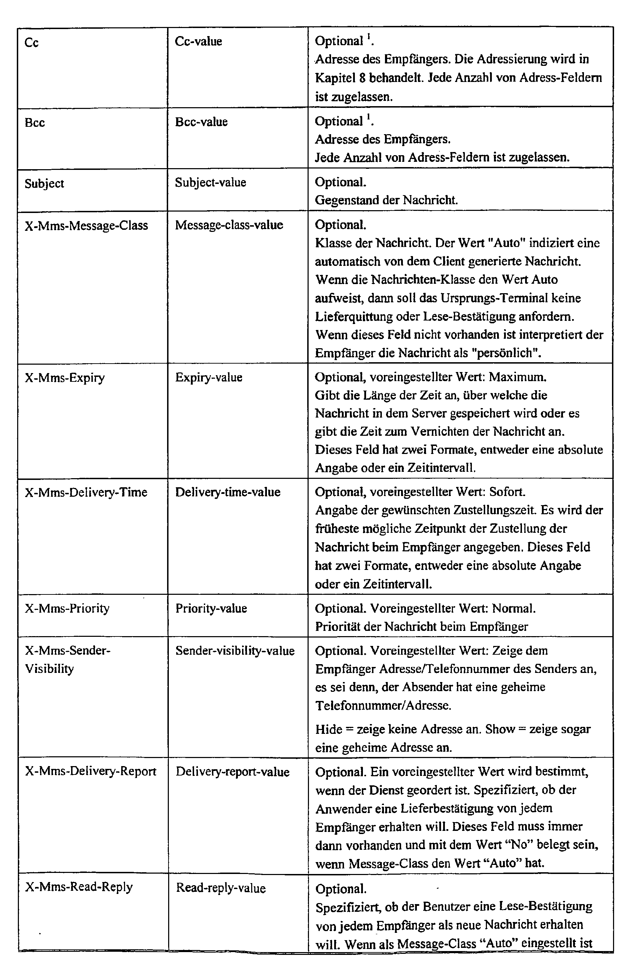

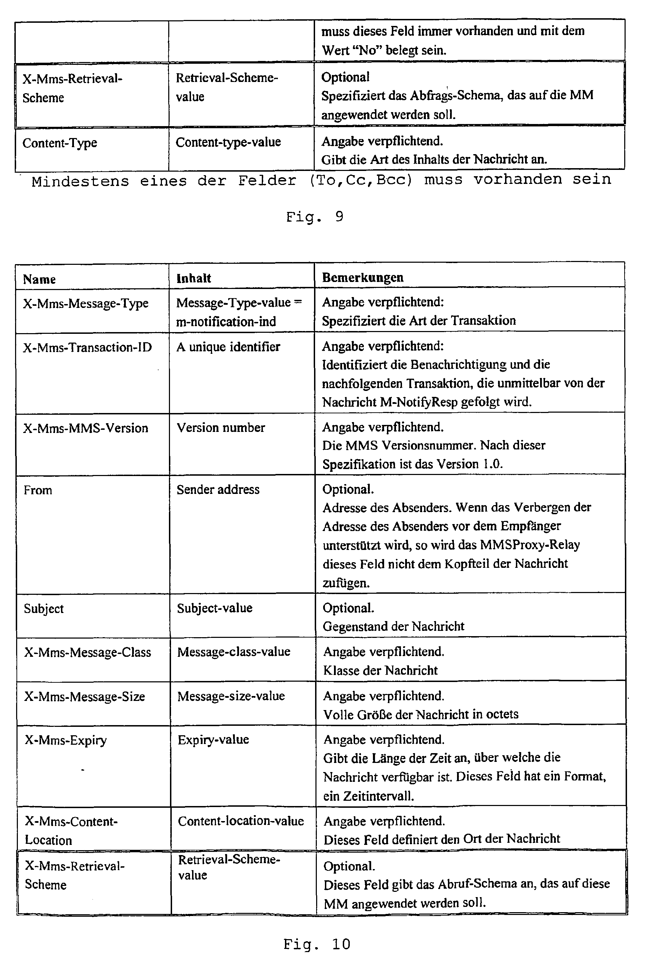

Elemente mit gleicher Funktion und Wirkungsweise sind in den Figuren 1 bis 10 durchgehend jeweils mit denselben Bezugszeichen versehen.

In den nachfolgenden Ausführungsbeispielen ist die Anwendung der Erfindung auf ein Datenübertragungsschema 1 für den WAP-Standard beschrieben, wie es in der Übertragung von insbesondere Bilddaten und formatierten Textdaten im Universal Mobile Telecommunications System, kurz UMTS-Standard, Verwendung finden wird. Es versteht sich, dass die Erfindung auch auf andere Standards bzw. Mobilfunksysteme in entsprechender Weise übertragbar ist. Insbesondere sind hier auch gemischte Kommunikationssysteme gemeint, die neben Mobilfunkstrecken auch Festnetzverbindungen o.ä. umfassen.

Wie bereits eingangs beschrieben ist im UMTS-Standard vorgesehen, zusätzlich zum bisherigen Short Message Service SMS einen sogenannten Multimedia Messaging Service MMS für die Übertragung von Nachrichten, auch als Multimedia messages MMs bezeichnet, vorzusehen. Damit können auch formatierte Texte und Bilder mit und ohne Ton übertragen werden. Die im SMS vorhandene Beschränkung auf eine Nachrichtenlänge von 160 Zeichen entfällt. Eine Übertragung u.a. von Audio- und Videonachrichten ist möglich, wobei dennoch weiterhin die sehr häufig genutzten SMS-Mitteilungen bei angepasstem Aufwand innerhalb des Systems erfindungsgemäß verarbeitet werden, wie im Anschluss an die Beschreibung des Standes der Technik beschrieben wird.

MMS ist über die Nutzung von WAP realisierbar. Dabei wird für die Funkübertragung von Daten, etwa von Multimedia Messages MMs, das in der Abbildung von Figur 1 dargestellte Kommunikationssystem 1 nach dem Wireless Session Protocol Schema WAP WSP angewendet. Die Abbildung von Figur 1 zeigt ein Nachrichtenfluss-Diagramm nach heutigem Stand der Technik gemäß Quelle [4], in dem der Austausch der WAP Nachrichten zwischen den drei beteiligten Instanzen bei Versand bzw. Empfang einer MM dargestellt ist. Dieses Kommunikationssystem 1 umfasst eine Ebene 2 eines Datenversenders, auch als MMS-Nutzerapplikation A bzw. MMS User Agent A M-UA_A bezeichnet. Unter dem Begriff einer MMS-Nutzer-Applikation versteht man eine Applikation z.B. auf einem Mobilfunkgerät, welche die MMS-Funktionalität realisiert. Weiter ist eine Ebene 3 eines Providers vorgesehen, dessen Netzelement den Service ausführt und nachfolgend als MMS Verbindungseinheit bzw. MMS RelayServer M-SR bezeichnet wird. Eine MMS-Verbindungseinheit M-SR ist ein Netzelement beim MMS Dienstanbieter, das den MMS-Nutzerapplikationen eine Kommunikation über das Netzwerk ermöglicht. Schließlich ist eine Ebene 4 als die Ebene eines Empfängers vorgesehen, der auch als MMS Nutzerapplikation B M-UA_B bezeichnet wird.

Selbstverständlich ist es möglich, dass in der Ebene 3 mehr als nur ein Provider beispielsweise auftritt. Das ist beispielsweise dadurch möglich, dass der Datenversender M-UA_A und der gewählte Empfänger M-UA_B bei unterschiedlichen Providern sind. Zudem können diese unterschiedlichen Provider noch durch dritte Provider als Netzbetreiber miteinander verbunden sein. Hier wird jedoch die vorliegende vereinfachte Darstellung gewählt, da die genaue Struktur in der Ebene 3 für den prinzipiellen Signalverlauf ohne Belang ist.

Die Abbildung von Figur 1 zeigt dementsprechend ein sogenanntes Transaction Flow Diagramm nach heutigem Stand der Technik gemäß [2], in dem der Austausch der WAP Messages zwischen nur drei beteiligten Instanzen, MMS User Agent A M-UA_A, MMS RelayServer M-SR und MMS User Agent B M-UA_B, bei Versand bzw. Empfang einer MM dargestellt ist. Die Ebene 2 des Datenversenders umfasst mindestens ein Teilnehmer-Endgerät oder Telekommunikationsgerät 5, ebenso umfasst auch die Ebene 4 des Empfängers mindestens ein Teilnehmer-Endgerät oder Telekommunikationsgerät 6. Diese Telekommunikationsgeräte 5,6 können beispielsweise als übliche Handies oder als Geräte mit weiteren Eingabe- oder Anzeigefunktionen, wie etwa Laptops, oder als eine Kombination aus Geräten beider Klassen ausgebildet sein.

Es wird nun die Abfolge einzelner Signale in dem vorstehend beschriebenen Kommunikationssystem 1 erläutert, die zum Versenden einer MMS von MMS User Agent A M-UA_A über den MMS RelayServer M-SR hin zum MMS User Agent B M-UA_B notwendig ist. Zwischen den beteiligten Elementen werden die Informationen mit Nachrichten ausgetauscht, die in dem Nachrichtenfluss-Diagramm in der Abbildung von Figur 1 mit Pfeilen dargestellt sind. Eine Nachricht besteht dabei grundsätzlich aus einem Kopf bzw. Header und optional aus einem Datenteil, dem sog. Body, der die Multimediaobjekte enthält. Der Nachrichtenfluss umfasst die folgenden Nachrichten:
- M-Sreq: MMS-Sendeanfrage, wird vom sendenden M-UA-A an die MMS Verbindungseinheit M-SR geschickt, um diese zur Weiterleitung des Inhalts der MM an den oder die Empfänger zu veranlassen.
- M-Sconf: MMS-Sendebestätigung, wird von der MMS- Verbindungseinheit M-SR an die sendende MMS-Nutzerapplikation gesendet, um der sendenden MMS-Nutzerapplikation den Status der Sendeanfrage zu übermitteln.
- M-Nind: MMS-Empfängerbenachrichtigung, dient der Benachrichtigung der adressierten MMS-Nutzerapplikation, dass eine Multimedianachricht zur Zustellung bereit liegt.
- M-NRind: MMS-Empfängerbenachrichtigungsbestätigung, wird von der adressierten MMS-Nutzerapplikation an die MMS-Verbindungseinheit M-SR geschickt, um den Erhalt der MMS-Empfängerbenachrichtigung zu bestätigen.
- W-Greq: MMS-Zustellanfrage, wird von der adressierten MMS-Nutzerapplikation an die MMS-Verbindungseinheit M-SR gesendet, um das Zustellen der Multimedianachricht zu veranlassen.
- M-Rconf: MMS-Zustellnachricht, wird von der MMS- Verbindungseinheit M-SR an die adressierte MMS-Nutzerapplikation gesendet, um die Multimedianachricht zur MMS- Nutzerapplikation zu übertragen.
- M-Aind: MMS-Zustellungsbestätigung, wird von der MMS- Nutzerapplikation an die MMS-Verbindungseinheit M-SR gesendet, um den Status der Zustellung der Multimedianachricht an die MMS-Nutzerapplikation zu melden.
- M-Dind: MMS-Zustellstatusbenachrichtigung, wird von der MMS-Verbindungseinheit M-SR an die sendende MMS- Nutzerapplikation gesendet und dient der Benachrichtigung der sendenden MMS-Nutzerapplikation, über den Status der zugestellten Nachricht.

Eine in dem Telekommunikationsgerät 5 des Versenders M-UA_A verfasste oder über dieses weiterzuleitende Multimedia message MM kann einen oder mehrere Elemente oder Datensätze enthalten, beispielsweise einzelne Bilder, Filmsequenzen, Texte oder ähnliches. Die MM wird zunächst als Anfrage-Sendung, die im WAP-Protokoll den Namen M-Send.req trägt, an den Provider M-SR in der Ebene 3 versandt. Von dort wird die eingegangene Sendung mit einer Rücksendung M-Sconf an den Versender M-UA-A der Ebene 2 quittiert. Nach dem WAP-Protokoll wird diese Rücksendung M-send.conf genannt.

Zeitlich darauffolgend wird vom Provider M-SR eine Information M-Nind an den Empfänger M-UA-B in Ebene 4 gesandt, mit der dieser darüber informiert wird, dass für ihn eine Nachricht beim Provider M-SR zum Herunterladen bereitliegt, nach dem WAP-Protokoll M-Notification.ind genannt.

Hierüber erhält der Provider M-SR beispielsweise automatisch eine quittierende Rückmeldung M-NRind oder M-NotifyResp.ind gemäß WAP Standard von dem Telekommunikationsgerät 6 des Empfängers M-UA-B aus Ebene 4 hin zur Ebene 3 zurückgesendet.

Erst auf Anforderung durch den Empfänger mit einer Sendung W-Greq oder entsprechend WSP GET.req wird von dem Provider M-SR die MM mit einer Sendung M-Rconf bzw. M-retrieve.com an den Empfänger M-UA-B weitergeleitet. Eine Nachricht M-Aind bzw. M-Acknowledge.ind quittiert den Empfang der MM in der Ebene 4. Eine abschließende Nachricht M-Dind bzw. M-Delivery.ind gibt eine Empfangsbestätigung von der Ebene 3 an den Versender M-UA-A in Ebene 2 zurück.

Zur Verwaltung der vorstehend genannten Sendungen dienen sog. Header-Felder, also der eigentlichen MM und/oder einzelnen Elementen vorangestellte Felder, in denen Informationen über die Herkunft, Sendezeit, Dateigröße und weitere Details enthalten sein können. Bisher bietet der Multimedia Messaging Service MMS nur die Wahl zwischen der verzögerten Zustellung der Nachricht, s.g. Deferred Retrieval nach Figur 1, und der unverzüglichen Zustellung der Nachricht, sog. Immediate Retrieval. Die unverzügliche Zustellung einer Nachricht ist analog der Darstellung von Figur 1 in Figur 2 skizziert. Hier fehlt dementsprechend die MMS- Empfängerbenachrichtigungsbestätigung M-NRind, da die MMS-Zustellanfrage W-Greq sofort ausgelöst wird. Die Wahlmöglichkeit zwischen den beiden Varianten liegt hier ausschließlich bei der empfangenden Nutzerapplikation M-UA_B.

Eine von der sendenden Nutzerapplikation M-UA_A veranlasste sofortige Zustellung ist damit ebenso wenig möglich, wie eine von der sendenden Nutzerapplikation veranlasste direkte Zustellung der Nachricht mit der MMS- Empfängerbenachrichtigung, ohne dass anschließend eine MMS-Zustellnachricht versendet wird. Ein Anwendungsfall für diese beiden Zustellvarianten ist die Zustellung sehr kurzer Text-Nachrichten, beispielsweise in Form der beliebten SMS, für die die bisherigen Zustellvarianten sehr aufwändig wären. Eine weitere Anwendungsmöglichkeit ist der Versand eines Verweises auf Inhalte außerhalb von MMS mit der MMS- Empfängerbenachrichtigung. Hier wäre keine Zustellung weiterer MMS-Inhalte mit der MMS-Zustellnachricht mehr notwendig.

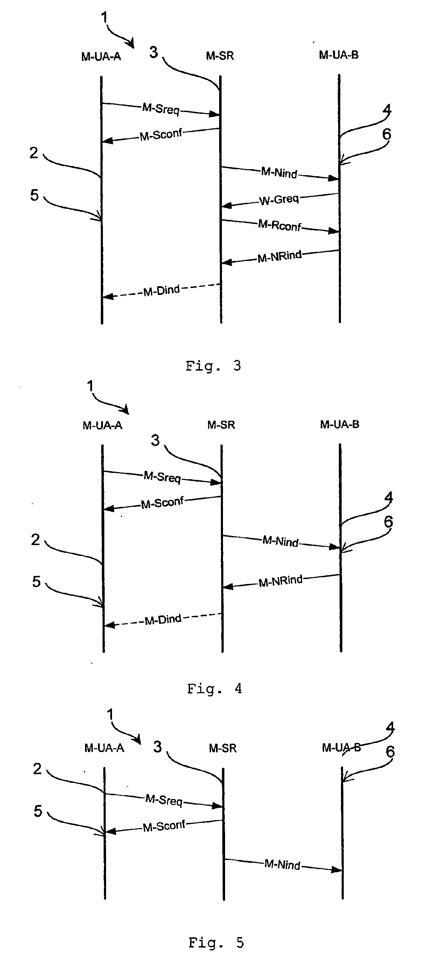

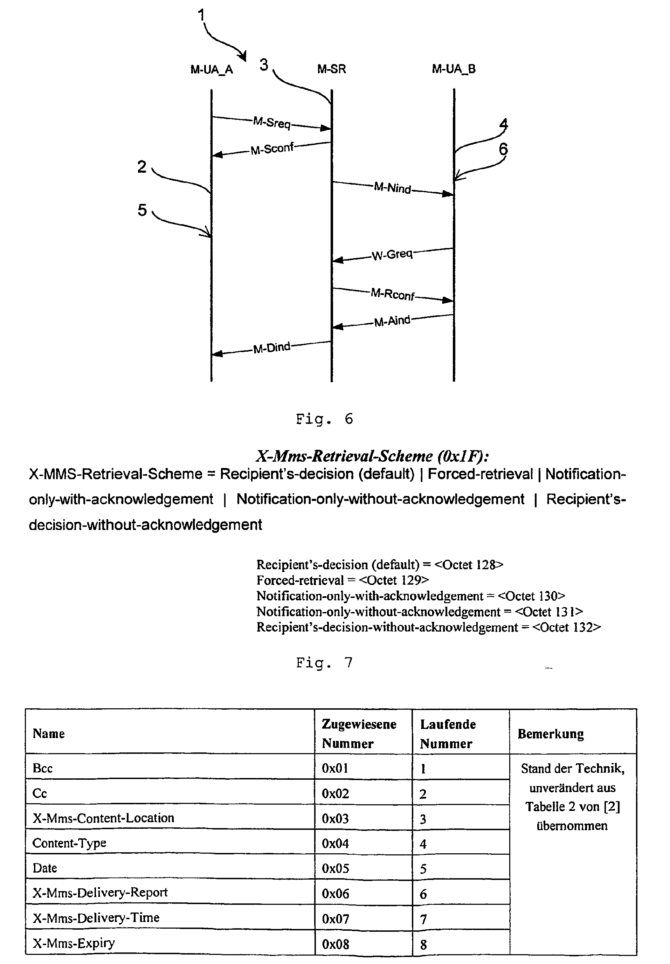

Erfindungsgemäß wird durch die Einführung eines neuen Signalisierungselements in das Protokoll des Multimedia Messaging Service MMS eine dementsprechende Erweiterung geschaffen. Demgemäß wird in der MMS-Spezifikation zur Codierung der Nachrichten des MMS nach Quelle [5] ein neues Signalisierungselement in Form eines Header-Feldes eingeführt, namentlich ist es das Feld "X-Mms-Retrieval-Scheme", wie in Figur 7 angegeben. Mit diesem Element kann die sendende MMS- Nutzerapplikation direkten Einfluss auf den Nachrichtenfluss zur Zustellung der MM nehmen. Erfindungsgemäß bietet das neue Signalisierungselement folgende Werte, die in der Darstellung von Figur 7 zusammengefasst sind:
- Recipient's-decision als Standard-Vorgabe: der Wert beschreibt den derzeitigen Stand der Technik: Die empfangende MMS-Nutzerapplikation kann zwischen Deferred Retrieval und Immediate Retrieval auswählen. Dabei stellt der Wert "Recipient's-decision" wie oben erläutert den Stand der Technik dar und dient nur der Rückwärtskompatibilität zur bisherigen Wahlmöglichkeit durch den M-UA_B.
- Forced-retrieval als forcierte, sofortige Art der Zustellung: Dieser Wert beschreibt die von der sendenden MMS-Nutzerapplikation oder MMS-Verbindungseinheit M-SR angeforderte sofortige Zustellung der MM an die empfangende MMS-Nutzerapplikation. Bei Empfang dieser Signalisierung soll die empfangende MMS- Nutzerapplikation die Zustellung der Multimedianachricht sofort durch Versand der MMS- Zustellanfrage an die MMS-Verbindungseinheit M-SR veranlassen, wie in Abbildung der Figuren 3durch das Fehlen der MMS- Empfängerbenachrichtigungsbestätigung M-NRind angedeutet. Dabei soll keine Interaktion mit dem Nutzer stattfinden. Der Nachrichtenfluss entspricht dabei dem in Figur 2 dargestellten Immediate Retrieval.
- Notification-only-with-acknowledgement, die direkte Zustellung mit Bestätigung: sie dient dazu, den gesamten Inhalt der Multimedianachricht mit der MMS- Empfängerbenachrichtigung zuzustellen, was vorzugsweise bei wenig umfangreichem Inhalt der MM angewendet werden kann, wenn etwa nur eine SMS-Nachricht oder ein Verweis auf einen externen Inhalt übermittelt werden soll. Die empfangende MMS- Nutzerapplikation antwortet auf den Empfang der MMS- Empfängerbenachrichtigung mit Signalisierung dieser Zustellvariante mit der MMS-Empfängerbenachrichtigungsbestätigung. Es erfolgt ausdrücklich keine MMS-Zustellanfrage. Abschließend kann die MMS-Zustellstatusbenachrichtigung von der MMS- Verbindungseinheit an die sendende MMS-Nutzerapplikation gemäß Stand der Technik geschickt werden. Der entsprechende Signalverlauf ist in der Abbildung von Figur 4 wiedergegeben.
- Notification-only-without-acknowledgement, also die direkte Zustellung ohne Bestätigung: Sie entspricht im Wesentlichen der zuvor beschriebenen Zustellungsvariante. Im Unterschied dazu entfällt jedoch auch die MMS- Empfängerbenachrichtigungsbestätigung und somit auch die optionale MMS- Zustellstatusbenachrichtigung. Der gesamte Nachrichtenfluss endet bereits nach erfolgter MMS-Empfängerbenachrichtigung. Damit ist diese Zustellungsvariante diejenige mit den wenigsten ausgetauschten Nachrichten und eignet sich damit besonders für kurze Nachrichten wie z.B. Instant Messages oder SMS-Nachrichten. Der entsprechende Signalverlauf dieser Ausführungsform ist in der Abbildung von Figur 5 wiedergegeben.
- Recipient's-decision-without-acknowledgement, die Zustellung kann nach Wahl des Empfängers entweder unmittelbar bzw. immediate oder verzögert bzw. deferred erfolgen. Bei verzögerter Zustellung soll die empfangende Nutzerapplikation keine MMS-Empfängerbenachrichtigungsbestätigung M-NRind senden. Dies ist insbesondere vorteilhaft, wenn der empfangenden Nutzerapplikation bzw. dem Nutzer die Versendung einer MMS-Empfängerbenachrichtigungsbestätigung gesondert in Rechnung gestellt würde, was z.B. der Fall sein kann, wenn die Übermittlung in einem anderen als dem Heimatnetzwerk stattfindet, wie dies im sog. Roaming der Fall ist. Die MMS-Verbindungseinheit M-SR kann in diesem Fall durch Einbettung der hier vorgeschlagenen Information in die MMS-Empfängerbenachrichtigung das entsprechende Verhalten der empfangenden MMS-Nutzerapplikation veranlassen.

Alternativ zu der vorstehend dargestellten expliziten Signalisierung der Zustellungsvarianten wäre nach einem nicht weiter ausgeführten Vorschlag auch eine implizite Signalisierung mittels definierter Werte für bereits existente Header-Felder möglich. Dazu könnte beispielsweise in dem Header-Feld X-Mms-Content-Location ein vereinbarter Uniform Resource Identifier, kurz URI,
"Notification.only.without.acknowledgement@MMS.org" verwendet werden. Diese Lösung funktioniert allerdings nur bei den Varianten, die ohne die MMS- Empfängerzustellnachricht auskommen. Alle anderen erfordern schließlich die Übertragung der tatsächlich in der MMS- Zustellanfrage zu benutzenden sog. Content-Location, d.h. die Referenz auf die Nachricht im Zuständigkeitsbereich der MMS Verbindungseinheit.

Die Vorteile der unter Bezug auf die Darstellung von Figur 7 beschriebenen Erfindung sind eine erhöhte Flexibilität der Nutzung des MMS, eine erhöhte Einflussmöglichkeit der sendenden MMS-Nutzerapplikation und eine effizientere Nutzung der Schnittstellen zwischen den Einheiten des Systems insbesondere beim Transport wenig umfangreicher Text- oder SMS- Nachrichten, dadurch dass der Inhalt einer MM nicht mehr zwangsweise mit der MMS-Zustellnachricht übermittelt werden muss, sondern auch die ohnehin nötige MMS-Empfängerbenachrichtigung zu diesem Zweck genutzt werden kann, wobei die MMS- Zustellnachricht komplett entfällt. Ein wesentlicher Vorteil eines erfindungsgemäßen Verfahrens mit struktur-konformer Erweiterung des aktuellen Standards liegt in der Eröffnung der Möglichkeit, den Multimedia Messaging Service flexibler und effizienter zu nutzen. Einerseits kann die sendende MMS- Nutzerapplikation die empfangende Nutzerapplikation zum unverzüglichen Herunterladen der Nachricht von der MMS- Verbindungseinheit auffordern, andererseits kann bei wenig umfangreichen Inhalten der Multimedianachricht ein verkürzter und damit effizienterer Nachrichtenfluss realisiert werden. Weiterhin kann von der MMS-Verbindungseinheit M-SR der Verzicht auf die MMS-Empfängerbenachrichtigungsbestätigung signalisiert werden und damit der Verkehr auf der Luftschnittstelle reduziert werden, was unter bestimmten Bedingungen eine kundenfreundlichere Abrechnung des Dienstes ermöglicht.

In dem nun folgenden Ausführungsbeispiel, das auf den durch das WAP-Forum definierten binären Codierungen der im MMS ausgetauschten Nachrichten basiert, wird die Möglichkeit einer Kennzeichnung mit dem Signalisierungselement X-Mms-Retrieval-Scheme im Kopf der MM demonstriert.

Dabei wird beispielhaft folgendes Szenario angenommen:
Eine MMS-Nutzerapplikation A M-UA_A verschickt eine Multimediannachricht mit einem kurzen Text, der einen Verweis auf eine Internetseite enthält, an eine MMS-Nutzerapplikation B M-UA_B. Der Absender entscheidet sich für eine direkte Zustellung ohne Bestätigung.

Die folgenden Messages werden zwischen den Einheiten übertragen.

MM wird an den Adressaten verschickt:

### M-Sreq (M-UA A → M-SR):

X-Mms-Message-Type: m-send-req
X-Mms-Transaction-ID: TRANSACTION-ID#1
X-Mms-Version: 1.0
Date: Tue, 22 May 2001 11:11:11 +0200
From: NutzerA@SP-A.de
To: NutzerB@SP-B.de
Subject: Hi NutzerB, schau doch mal auf meine neue Homepage (http://www.NutzerA.de)! MfG, NutzerA ;-)
X-Mms-Retrieval-Scheme: Notification-only-without-acknowledgement
Content-Type: */*

Die erfindungsgemäß neue Zustellvariante wird durch das neue Signalisierungselement "X-Mms-Retrieval-Scheme: Notification-only-without-acknowledgement" codiert. Das nach Stand der Technik vorgeschriebene Feld Content-Type kann auf den Wert "*/*" gesetzt werden.

Nach dem Stand der Technik wird die Sendeanfrage, in WAP als M-Send.req genannt, des MMS User Agent A mit einer Nachricht M-Sconf vom M-SR quittiert, in WAP: M-Send.conf. Im Rahmen der vorliegenden Ausführungsform der Erfindung wird diese Nachricht nicht modifiziert und daher hier nicht aufgeführt.

Im MMS ist nach Quelle [1, 2] vorgesehen, einen MMS Teilnehmer über neue Nachrichten, die für ihn vorliegen und zum Herunterladen bereit sind, zu informieren. Diesen Zweck erfüllt die Empfängerbenachrichtigung M-Nind, in WAP: M- Notification.ind. In diesem Beispiel wird eine Benachrichtigung an den Empfänger NutzerB versendet.

### M-Nind an NutzerB (M-SR -> M-UA-B):

X-Mms-Message-Type: m-notification-ind
X-Mms-Transaction-ID: TRANSACTION-ID#2
X-Mms-Version: 1.0
From: NutzerA@SP-A.de
Subject: Hi NutzerB, schau doch mal auf meine neue Homepage (http://www.NutzerA.de)! MfG, NutzerA ;-)
X-Mms-Message-Class: Personal
X-Mms-Message-Size: 0
X-Mms-Expiry: 0
X-Mms-Retrieval-Scheme: Notification-only-without-acknowledgement

Neben den üblichen Feldern enthält auch die Empfängerbenachrichtigung das neue Element X-Mms-Retrieval-Scheme. Weiterhin ist zu beachten, dass keine Nachricht mehr von der MMS- Verbindungseinheit herunterzuladen ist. Die vorgeschriebene Angabe der Nachrichtengröße bzw. Message-Size kann entweder entfallen, was nach dem Stand der Technik aktuell nicht möglich ist, oder wie im Beispiel auf Null gesetzt werden.

Gleiches gilt für das Feld X-Mms-Expiry, das im normalen Anwendungsfall die Dauer der Speicherung der Nachricht durch die MMS-Verbindungseinheit M-SR angibt. Ist diese Zeit ohne Herunterladen der Nachricht verstrichen, verfällt die Nachricht auf dem Server. Das Feld ist bei Einsatz der Zustellungsvarianten ohne MMS-Zustellnachricht nicht sinnvoll. Es bestehen auch hier die Möglichkeiten, das Feld optional zu machen und in diesem Falle wegzulassen, oder einen bestimmten Wert für den hier beschriebenen Fall zu spezifizieren - z.B.: Null. Letztere Möglichkeit ist oben dargestellt.

Mit dieser Nachricht ist der gesamte Nachrichtenfluss bereits beendet. Alle sonst in MMS üblichen Nachrichten können damit zur effektiven Senkung des Datenverkehrs auf dem Übertragungskanal entfallen.

Der Multimedia Messaging Service MMS spezifiziert Mechanismen zum Transport beliebiger Inhalte von einem Teilnehmer des Service über ein Netzwerk zu einem anderen Teilnehmer, wobei die für den Nachrichtentransport nutzbaren Informationselemente der Nachrichten, die Header-Felder sehr flexibel einsetzbar sind. Zusammenfassend sind vorstehend verschiedene Möglichkeiten zum Unterstützen attraktiver Anwendungsmöglichkeiten für diverse bereits bekannte Nachrichtenarten auch in MMS vorgestellt worden, wobei der Wirkungsgrad des Nachrichtenflusses vorteilhafterweise dadurch verbessert wird, dass erfindungsgemäß auf in den vorstehend genannten Fällen unnötigen Nachrichten verzichtet wird. Die bisher beschriebenen unterschiedlichen Nachrichtenflüsse sind für die Übertragung von multimedialen Inhalten entwickelt worden und sind nicht für die Übertragung von kurzen Nachrichten - wie etwa von Nachrichten des Short Message Service SMS - oder auch von Verweisen auf andere Quellen optimiert, d.h. z.B. Referenzen auf Internet-Seiten, die dann mit einer externen Anwendung aufgerufen werden können, beispielsweise einem Internet-Browser. Die vorliegende Erfindung ermöglicht eine strukturkonforme Eingliederung bekannter Nachrichtenflüsse für bekannte und neue Datenformate in angepasster Form zusammen mit einer Nutzung der jeweiligen Vorteile.

Hintergrundangaben zu WAP und MMS finden sich zusammengefasst insbesondere an folgenden Stellen:
[1] 3G TS 22.140 version 4.1.0, Release 4; Third Generation Partnership Project; Technical Specification Group Terminals; Multimedia Messaging Service (MMS); Service Aspects; Stage 1, 2001.
[2] 3G TS 23.140 version 4.2.0, Release 4; Third Generation Partnership Project; Technical Specification Group Terminals; Multimedia Messaging Service (MMS) ; Functional Description; Stage 2, 2001.
[3] WAP-205-MMS Architecture Overview, Approved Specification; Wireless Application Protocol, Multimedia Messaging Service; Architecture Overview Specification, 2002.
[4] WAP-206-MMS Client Transactions, Approved Specification; Wireless Application Protocol; WAP Multimedia, Messaging Service Client Transaction; 2002.
[5] WAP-209-MMSEncapsulation, Approved Specification ; Wireless Application Protocol; Multimedia Messaging Service; Message Encapsulation; 2002.
[6] WAP-203-WSP, Specification, Approved Version, Wireless Application Protocol: Wireless Session Protocol; 2000
[7] "Digital cellular telecommunications
   system (Phase 2+) (GSM);Universal Mobile Telecommunications System
   (UMTS);Multimedia Messäging Service (MMS);
   Functional description; Stage 2 (3GPP TS 23.140 version 4.6.0 Release 4)"
   ETSI TS 123 140 V4.6.0
   2002

## Patentansprüche

1. Verfahren zur Übertragung von Daten in einem Kommunikationssystem, insbesondere zur Übertragung von Text- und/oder Bilddaten mit oder ohne Ton,
wobei eine zu übermittelnde Datenmenge aus einzelnen Elementen zusammengesetzt wird, die jeweils nach gleichen oder unterschiedlichen Standards codiert werden,
wobei durch eine sendende MMS-Nutzerapplikation und/oder MMS-Verbindungseinheit eine Kennzeichnung zur Festlegung einer Auswahl aus mehreren Varianten der Zustellung einer Nachricht vorgenommen wird, **dadurch gekennzeichnet,**
**dass** neben einer unverzüglichen Zustellung oder einer verzögerten Zustellung der Nachricht eine der folgenden Zustellvarianten festgelegt und an eine empfangende MMS-Nutzerapplikation signalisiert wird:
- forcierte, sofortige Zustellung, bei der durch eine empfangende MMS-Nutzerapplikatian eine Zustellung der Multimedianachricht sofort durch Versand einer MMS-Zustellanfrage an die MMS-Verbindungseinheit veranlasst wird,
- direkte Zustellung mit Bestätigung, bei der die Multimedianachricht mit einer MMS-Empfängerbenachrichtigung zugestellt und durch die empfangende MMS-Nutzerapplikation auf den Empfang der MMS-Empfängerbenachrichtigung mit Signalisierung dieser Zustellvariante mit einer MMS-Empfängerbenachrichtigungsbestätigung geantwortet wird, oder
- direkte Zustellung ohne Bestätigung, bei der die Multimedianachricht mit einer MMS-Empfängerbenachrichtigung zugestellt wird.

2. Verfahren nach Anspruch 1, **dadurch gekennzeichnet,**
**dass** die Daten zum Versand derart aufbereitet werden, dass sie einen Header zum Transport von Organisationsinformationen und einen Body zum Transport einer jeweiligen Nutzinformation als Elemente vorzugsweise in Form mehrerer Datenpakete umfassen.

3. Verfahren nach einem der beiden vorhergehenden Ansprüche, **dadurch gekennzeichnet,**
**dass** die Daten als Multimedia Message (MM) in einem Multimedia Messaging Service (MMS) übertragen werden.

4. Verfahren nach dem vorhergehenden Anspruch, **dadurch gekennzeichnet,**
**dass** die Daten auf ein mobiles Teilnehmer-Endgerät übertragen werden, insbesondere ein WAP-fähiges Mobiltelefon.

5. Verfahren nach einem der vorhergehenden Ansprüche, **dadurch gekennzeichnet, dass** eine empfängerseitig gewählte Zustellung ohne MMS-Empfängerbenachrichtigungsbestätigung signalisiert wird.

6. Verfahren nach dem vorhergehenden Anspruch, **dadurch gekennzeichnet,**
**dass** eine unverzügliche Zustellung oder eine verzögerte Zustellung der Nachricht als standardisierte Voreinstellung signalisiert wird.

7. Verfahren nach einem der vorhergehenden Ansprüche, **dadurch gekennzeichnet,**
**dass** zur Kennzeichnung ein zusätzliches Header-Feld geschaffen wird.

8. Verfahren nach dem vorhergehenden Anspruch, **dadurch gekennzeichnet,**
**dass** eine Signalisierung durch eine neues Datenelement oder ein zusätzliches Header-Feld (X-Mms-Retrieval-Scheme) vorgenommen wird.

9. Verfahren nach einem der beiden vorhergehenden Ansprüche, **dadurch gekennzeichnet,**
**dass** eine Codierung des Feld-Namens und/oder eine Codierung des Feld-Wertes durchgeführt wird.

10. Verfahren nach einem der beiden vorhergehenden Ansprüche, **dadurch gekennzeichnet,**
**dass** die Signalisierung über das Header-Feld in WAP wie folgt vorgenommen wird:
- Codierung des Feld-Namens X-Mms-Retrieval-Scheme als 0x1F oder
- **dass** die Signalisierung der jeweiligen Zustellungsvariante durch einen definierten Wert für das Header-Feld X-Mms-Content-Location vorgenommen wird.

11. Verfahren nach dem vorhergehenden Anspruch, **dadurch gekennzeichnet,**
**dass** die neue Signalisierung in den Nachrichten MMS-Sendeanfrage und MMS- Empfängerbenachrichtigung Anwendung findet.

12. Verfahren nach einem der Ansprüche 7 bis 11, **dadurch gekennzeichnet,**
**dass** eine Codierung des zusätzlichen Header-Feldes (X-Mms-Retrieval-Scheme) zur Angabe einer Zustellvariante durch folgende Werte vorgenommen wird:
- verzögerte oder unverzügliche Zustellung, als Standard Vorgabe <Octet 128>,
- forcierte, sofortige Zustellung <Octet 129>,
- direkte Zustellung mit Bestätigung <Octet 130>,
- direkte Zustellung ohne Bestätigung <Octet 131> und/oder
- verzögerte oder unverzügliche Zustellung ohne Versenden der Empfängerbenachrichtigungsbestätigung <Octet 132>.

13. Verfahren nach einem der vorhergehenden Ansprüche, **dadurch gekennzeichnet,**
**dass** die MMS-Verbindungseinheit (M-SR) eine Signalisierung gemäß der vorhergehenden Ansprüche in eine Multimedia Message (MM) einfügt.

14. Verfahren nach den vorhergehenden Ansprüche, **dadurch gekennzeichnet,**
**dass** die MMS-Verbindungseinheit (M-SR) eine Signalisierung in Abhängigkeit von dem Nutzerprofil des Empfänger, den Eigenschaften der empfangenden MMS-Nutzerapplikation und des mobilen Teilnehmerendgerätes und/oder in Abhängigkeit des Netzwerks, in das das mobile Teilnehmerendgerät eingebucht ist, in die MMS- Empfängerbenachrichtigung einfügt.

15. Sendeeinheit zur Übertragung von Daten in Form von Text- und/oder Bilddaten mit oder ohne Ton, die als Elemente einer zu übermittelnden Datenmenge nach gleichen oder unterschiedlichen Standards codiert sind, mit einem Mittel zur Festlegung einer Kennzeichnung einer Auswahl aus mehreren Varianten der Zustellung einer Nachricht, **dadurch gekennzeichnet,**
**dass** neben einer unverzüglichen Zustellung oder einer verzögerten Zustellung der Nachricht eine der folgenden Zustellvarianten festgelegt und an eine empfangende MMS-Nutzerapplikation signalisiert wird:
- forcierte, sofortige Zustellung, bei der durch eine empfangende MMS-Nutzerapplikation eine Zustellung der Multimedianachricht sofort durch Versand einer MMS-Zustellanfrage an die MMS-Verbindungseinheit veranlasst wird,
- direkte Zustellung mit Bestätigung, bei der die Multimedianachricht mit einer MMS-Emptangerbenachrichtigung zugestellt und durch die empfangende MMS-Nutzerapplikation auf den Empfang der MMS-Empfängerbenachrichtigung mit Signalisierung dieser Zustellvariante mit einer MMS-Empfängerbenachrichtigungsbestätigung geantwortet wird, oder
- direkte Zustellung ohne Bestätigung, bei der die Multimedianachricht mit einer MMS-Empfängerbenachrichtigung zugestellt wird.

16. MMS-Verbindungseinheit zur Übertragung von Daten in Form von Text- und/oder Bilddaten mit oder ohne Ton, die als Elemente einer zu übermittelnden Datenmenge nach gleichen oder unterschiedlichen Standards codiert sind, mit einem Mittel zur Festlegung einer Kennzeichnung einer Auswahl aus mehreren Varianten der Zustellung einer Nachricht, **dadurch gekennzeichnet,**
**dass** neben einer unverzüglichen Zustellung oder einer verzögerten Zustellung der Nachricht eine der folgenden Zustellvarianten festgelegt und an eine empfangende MMS-Nutzerapplikation signalisiert wird:
- forcierte, sofortige Zustellung, bei der durch eine empfangende MMS-Nutzerapplikation eine Zustellung der Multimedianachricht sofort durch Versand einer MMS-Zustellanfrage an die MMS-Verbindungseinheit veranlasst wird,
- direkte Zustellung mit Bestätigung, bei der die Multimedianachricht mit einer MMS-Empfängerbenachrichtigung zugestellt und durch die empfangende MMS-Nutzerapplikation auf den Empfang der MMS-Empfängerbenachrichtigung mit Signalisierung dieser Zustellvariante mit einer MMS-Empfängerbenachrichligungsbestätigung geantwortet wird, oder
- direkte Zustellung ohne Bestätigung, bei der die Multimedianachricht mit einer MMS-Empfängerbenachrichtigung zugestellt wird.

17. Empfangseinheit zum Empfangen von Daten in Form von Text- und/oder Bilddaten mit oder ohne Ton, die als Elemente einer zu übermittelnden Datenmenge nach gleichen oder unterschiedlichen Standards codiert sind, mit einer empfangenden MMS-Nutzerapplikation, die **dadurch gekennzeichnet ist, dass**
- bei einer forcierten, sofortigen Zustellung sofort ein Versand einer MMS-Zustellanfrage an eine MMS-Verbindungseinheit veranlasst wird,
- bei einer direkten Zustellung mit Bestätigung, bei der die Multimedianachricht mit einer MMS-Empfängerbenachrichtigung zugestellt wird, auf den Empfang einer MMS-Empfängerbenachrichtigung mit Signalisierung dieser Zustellvariante mit einer MMS-Empfängerbenachrichtigungsbestätigung an eine MMS-Verbindungseinheit geantwortet wird, oder
- bei einer direkten Zustellung ohne Bestätigung, bei der die Multimedianachricht mit einer MMS-Empfängerbenachrichtigung zugestellt wird, auf den Empfang einer MMS-Empfängerbenachrichtigung mit Signalisierung dieser Zustellvariante nicht mit einer MMS-Empfängerbenachachrigungsbestätigung an eine MMS-Verbindungseinheit geantwortet wird.

18. Sende- bzw. Empfangseinheit nach einem der Ansprüche 15 oder 17, **dadurch gekennzeichnet,**
**dass** die Sende- bzw. Empfangseinheit als Teilnehmerendgerät ausgebildet ist.

19. Sende- bzw. Empfangseinheit nach Anspruch 18, **dadurch gekennzeichnet,**
**dass** das Teilnehmerendgerät als Mobiltelefon, insbesondere nach dem UMTS-Standard, ausgebildet ist.

20. Computerprogrammerzeugnis, das ein computerlesbares Speichermedium umfasst, auf dem ein Programm gespeichert ist, das einer Datenverarbeitungsanlage oder einem Computer ermöglicht, nachdem es in den Speicher des Computers geladen worden ist, innerhalb von Datenübertragung in einem Kommunikationssystem und insbesondere einem Mobilfunknetz den zu übertragenden Daten nach Vorgabe durch einen Absender eine Kennzeichnung eines Elementes vorzunehmen, um eine Auswahl aus mehreren Varianten der Zustellung einer Nachricht an einen Empfänger festzulegen, wobei neben einer unverzüglichen Zustellung oder einer verzögerten Zustellung der Nachricht eine der folgenden Zustellvarianten festgelegt und an eine empfangende MMS-Nutzerapplikation signalisiert wird:
- forcierte, sofortige Zustellung, bei der durch eine empfangende MMS-Nutzerapplikation eine Zustellung der Multimedianachricht sofort durch Versand einer MMS-Zustellanfrage an die MMS-Verbindungseinheit veranlasst wird,
- direkte Zustellung mit Bestätigung, bei der die Multimedianachricht mit einer MMS-Empfängerbenachrichtigung zugestellt und durch die empfangende MMS-Nutzerapplikation auf den Empfang der MMS-Empfängerbenachrichtigung mit Signalisierung dieser Zustellvariante mit einer MMS-Empfängerbenachrichtigungsbestätigung geantwortet wird oder
- direkte Zustellung ohne Bestätigung, bei der die Multimedianachricht mit einer MMS-Empfängerbenachrichtigung zugestellt wird.

21. Computerprogrammerzeugnis nach dem vorhergehenden Anspruch, **dadurch gekennzeichnet,**
**dass** das Programm der Datenverarbeitungsanlage oder dem Computer ermöglicht ein Verfahren nach einem der Ansprüche 1 bis 14 bei Datenversand in einem Mobilfunknetz durchzuführen.

22. Kommunikationssystem, das eine Empfangseinheit nach einem der Ansprüche 17 bis 19 und eine MMS-Verbindungseinheit (M-SR) umfasst, **dadurch gekennzeichnet,**
**dass** die MMS-Verbindungseinheit ein Mittel zur Festlegung einer Kennzeichnung einer Auswahl aus mehreren Varianten der Zustellung einer Nachricht aufweist, womit neben einer unverzüglichen Zustellung oder einer verzögerten Zustellung der Nachricht eine der folgenden Zustellvarianten festgelegt und an eine empfangende MMS-Nutzerapplikation signalisiert wird:
- forcierte, sofortige Zustellung, bei der durch eine empfangende MMS-Nutzerapplikation eine Zustellung der Multimedianachricht sofort durch Versand einer MMS-Zustellanfrage an die MMS-Verbindungseinheit veranlasst wird,
- direkte Zustellung mit Bestätigung, bei der die Multimedianachricht mit einer MMS-Empfängerbenachrichtigung zugestellt und durch die empfangende MMS-Nutzerapplikation auf den Empfang der MMS-Empfängerbenachrichtigung mit Signalisierung dieser Zustellvariante mit einer MMS-Empfängerbenachrichtigungsbestätigüng geantwortet wird, oder
- direkte Zustellung ohne Bestätigung, bei der die Multimedianachricht mit einer MMS-Emplängerbenachrichtigung zugestellt wird.

23. Kommunikationssystem nach Anspruch 20, **dadurch gekennzeichnet,**
**dass** das Kommunikationssystem eine Sendeeinheit nach einem der Ansprüche 15, 18 oder 19 umfasst
und/oder ein Computerprogrammerzeugnis nach einem der Ansprüche 20 bis 21 oder dessen Benutzung beinhaltet ist.

## Claims

1. Method for transmitting data in a communication system, particularly for transmitting text and/or image data with or without sound,
wherein a volume of data to be transmitted is compiled from individual elements which are respectively coded according to the same or different standards,
wherein a sending MMS user application and/or MMS connection unit performs identification to stipulate a selection from a plurality of variants for delivery of a message, **characterized**
**in that** besides immediate delivery or delayed delivery of the message, one of the following delivery variants is stipulated and is signalled to a receiving MMS user application:
- forced, immediate delivery, which involves a receiving MMS user application prompting delivery of the multimedia message immediately by sending an MMS delivery request to the MMS connection unit,
- direct delivery with confirmation, which involves the multimedia message being delivered with an MMS receiver notification and the receiving MMS user application responding to receipt of the MMS receiver notification by signalling this delivery variant with an MMS receiver notification confirmation, or
- direct delivery without confirmation, which involves the multimedia message being delivered with an MMS receiver notification.

2. Method according to Claim 1, **characterized in that** the data for dispatch are conditioned such that they comprise a header for transporting organization information and a body for transporting a respective user information item as elements preferably in the form of a plurality of data packets.

3. Method according to one of the two preceding claims, **characterized**
**in that** the data are transmitted as a multimedia message (MM) in a multimedia messaging service (MMS).

4. Method according to the preceding claim, **characterized**
**in that** the data are transmitted to a mobile subscriber terminal, particularly a WAP-compatible mobile telephone.

5. Method according to one of the preceding claims, **characterized**
**in that** delivery selected by the receiver is signalled without MMS receiver notification confirmation.

6. Method according to the preceding claim, **characterized**
**in that** immediate delivery or delayed delivery of the message is signalled as a standardized preset.

7. Method according to one of the preceding claims, **characterized**
**in that** an additional header field is provided for the identification.

8. Method according to the preceding claim, **characterized**
**in that** signalling is performed by a new data element or an additional header field (X-Mms-Retrieval-Scheme).

9. Method according to one of the two preceding claims, **characterized**
**in that** coding of the field name and/or coding of the field value is performed.

10. Method according to one of the two preceding claims, **characterized**
**in that** the signalling via the header field in WAP is performed as follows:
- the field name x-Mms-Retrieval-Scheme is coded as 0x1F, or
- the signalling of the respective delivery variant is performed by a defined value for the header field X-Mms-Content-Location.

11. Method according to the preceding claim, **characterized**
**in that** the new signalling is used in the messages MMS send request and MMS receiver notification.

12. Method according to one of Claims 7 to 11, **characterized**
**in that** coding of the additional header field (X-Mms-Retrieval-Scheme) to indicate a delivery variant is performed by the following values: - delayed or immediate a delivery, as standard selection <octet 128>,
- forced, immediate delivery <octet 129>,
- direct delivery with confirmation <octet 130>,
- direct delivery without confirmation <octet 131> and/or
- delayed or immediate delivery without sending the receiver notification confirmation <octet 132>.

13. Method according to one of the preceding claims, **characterized**
**in that** the MMS connection unit (M-SR) inserts signalling according to the preceding claims into a multimedia message (MM).

14. Method according to the preceding claims, **characterized**
**in that** the MMS connection unit (M-SR) inserts signalling into the MMS receiver notification on the basis of the user profile of the receiver, the properties of the receiving MMS user application and of the mobile subscriber terminal and/or on the basis of the network in which the mobile subscriber terminal is registered.

15. Transmission unit for transmitting data in the form of text and/or image data with or without sound which are coded according to the same or different standards as elements of a volume of data to be transmitted, having a means for stipulating an identification for a selection from a plurality of variants for delivery of a message, **characterized**
**in that** besides immediate delivery or delayed delivery of the message, one of the following delivery variants is stipulated and is signalled to a receiving MMS user application:
- forced, immediate delivery, which involves a receiving MMS user application prompting delivery of the multimedia message immediately by sending an MMS delivery request to the MMS connection unit,
- direct delivery with confirmation, which involves the multimedia message being delivered with an MMS receiver notification and the receiving MMS user application responding to receipt of the MMS receiver notification by signalling this delivery variant with an MMS receiver notification confirmation, or
- direct delivery without confirmation, which involves the multimedia message being delivered with an MMS receiver notification.

16. MMS connection unit for transmitting data in the form of text and/or image data with or without sound which are coded according to the same or different standards as elements of a volume of data to be transmitted, having a means for stipulating an identification for a selection from a plurality of variants for delivery of a message, **characterized**
**in that** besides immediate delivery or delayed delivery of the message, one of the following delivery variants is stipulated and is signalled to a receiving MMS user application:
- forced, immediate delivery, which involves a receiving MMS user application prompting delivery of the multimedia message immediately by sending an MMS delivery request to the MMS connection unit,
- direct delivery with confirmation, which involves the multimedia message being delivered with an MMS receiver notification and the receiving MMS user application responding to receipt of the MMS receiver notification by signalling this delivery variant with an MMS receiver notification confirmation, or
- direct delivery without confirmation, which involves the multimedia message being delivered with an MMS receiver notification.

17. Reception unit for receiving data in the form of text and/or image data with or without sound which are coded according to the same or different standards as elements of a volume of data to be transmitted, having a receiving MMS user application, which is **characterized in that**
- forced, immediate delivery immediately prompts dispatch of an MMS delivery request to an MMS connection unit,
- direct delivery with confirmation, which involves the multimedia message being delivered with an MMS receiver notification, involves response to the receipt of an MMS receiver notification by signalling this delivery variant with an MMS receiver notification confirmation to an MMS connection unit, or
- direct delivery without confirmation, which involves the multimedia message being delivered with an MMS receiver notification, involves response to the receipt of an MMS receiver notification by signalling this delivery variant not with an MMS receiver notification confirmation to an MMS connection unit.

18. Transmission and/or reception unit according to one of Claims 15 and 17, **characterized in that** the transmission and/or reception unit is in the form of a subscriber terminal.

19. Transmission and/or reception unit according to Claim 18, **characterized in that** the subscriber terminal is in the form of a mobile telephone, particularly based on the UMTS standard.

20. Computer program product which comprises a computer-readable storage medium on which a program is stored which allows a data professing installation or a computer, once it has been loaded into the memory of said computer, within data transmission in a communication system and particularly a radio mobile network, to perform identification of an element for the data which are to be transmitted according to a selection by a sender in order to stipulate a selection from a plurality of variants for the delivery of a message to a receiver, wherein besides immediate delivery or delayed delivery of the message, one of the following delivery variants is stipulated and is signalled to a receiving MMS user application:
- forced, immediate delivery, which involves a receiving MMS user application prompting delivery of the multimedia message immediately by sending an MMS delivery request to the MMS connection unit,
- direct delivery with confirmation, which involves the multimedia message being delivered with an MMS receiver notification and the receiving MMS user application responding to receipt of the MMS receiver notification by signalling this delivery variant with an MMS receiver notification confirmation, or
- direct delivery without confirmation, which involves the multimedia message being delivered with an MMS receiver notification.

21. Computer program product according to the preceding claim, **characterized**
**in that** the program allows the data professing installation or the computer to carry out a method according to one of Claims 1 to 14 for data dispatch in a mobile radio network.

22. communication system which comprises a reception unit according to one of Claims 17 to 19 and an MMS connection unit (M-SR), **characterized**
**in that** the MMS connection unit has a means for stipulating an identification for a selection from a plurality of variants for the delivery of a message, with which, besides immediate delivery or delayed delivery of the message, one of the following delivery variants is stipulated and is signalled to a receiving MMS user application,
- forced, immediate delivery, which involves a receiving MMS user application prompting delivery of the multimedia message immediately by sending an MMS delivery request to the MMS connection unit,
- direct delivery with confirmation, which involves the multimedia message being delivered with an MMS receiver notification and the receiving MMS user application responding to receipt of the MMS receiver notification by signalling this delivery variant with an MMS receiver notification confirmation, or
- direct delivery without confirmation, which involves the multimedia message being delivered with an MMS receiver notification.

23. Communication system according to Claim 20, **characterized**
**in that** the communication system comprises a transmission unit according to one of Claims 15, 18 and 19
and/or a computer program product according to one of Claims 20 to 21 or the use thereof is included.

## Revendications

1. Procédé pour la transmission de données dans un système de communication, en particulier pour la transmission de données de texte et/ou de données d'image avec ou sans son,
une quantité de données à transmettre étant composée d'éléments individuels, qui sont codés à chaque fois selon des standards identiques ou différents,
un marquage pour la définition d'un choix à partir de plusieurs variantes de la livraison d'un message étant effectué par une application d'utilisateur de MMS émettrice et/ou une unité de liaison de MMS,
**caractérisé en ce que**
parallèlement à une livraison immédiate ou à une livraison retardée du message, l'une des variantes de livraison suivantes est définie et signalée à une application utilisateur de MMS réceptrice :
- livraison immédiate et forcée, lors de laquelle une livraison du message multimédia est ordonnée par une application utilisateur de MMS réceptrice immédiatement par l'envoi d'une demande de livraison de MMS à l'unité de liaison de MMS,
- livraison directe avec confirmation, lors de laquelle le message multimédia est délivré avec une information du destinataire de MMS et on répond par l'application utilisateur de MMS, réceptrice à la réception de l'information du destinataire de MMS avec la signalisation de cette variante de livraison avec un accusé d'information du destinataire de MMS, ou
- livraison directe sans confirmation, lors de laquelle le message multimédia est délivré avec une information du destinataire de MMS.

2. Procédé selon la revendication 1, **caractérisé en ce que**
les données pour l'envoi sont traitées de telle sorte qu'elles comportent un en-tête pour le transport d'informations d'organisation et un corps pour le transport d'une information utile respective comme éléments de préférence sous la forme de plusieurs paquets de données.

3. Procédé selon l'une quelconque des deux revendications précédentes, **caractérisé en ce que** les données sont transmises sous forme de Multimedia Message (MM) dans un Multimedia Messaging Service (MMS).

4. Procédé selon la revendication précédente, **caractérisé en ce que**
les données sont transmises à un terminal mobile, en particulier un téléphone portable compatible WAP.

5. Procédé selon l'une quelconque des revendications précédentes, **caractérisé en ce que** une livraison est choisie côté destinataire sans confirmation d'information du destinataire de MMS est signalée.

6. Procédé selon la revendication précédente, **caractérisé en ce que**
une livraison immédiate ou une livraison retardée du message est signalée comme préréglage standardisé.

7. Procédé selon l'une quelconque des revendications précédentes, **caractérisé en ce que**
un champ d'en-tête supplémentaire est créé pour le marquage.

8. Procédé selon la revendication précédente, **caractérisé en ce que**
une signalisation par un nouvel élément de données ou un champ d'en-tête supplémentaire (X-Mms-Retrieval-Scheme) est effectuée.

9. Procédé selon l'une quelconque des deux revendications précédentes, **caractérisé en ce que**
un codage du nom de champ et/ou un codage de la valeur de champ est effectué.

10. Procédé selon l'une quelconque des deux revendications précédentes, **caractérisé en ce que**
la signalisation est effectuée par le champ d'en-tête dans WAP de la façon suivante :
- codage du nom de champ X-Mms-Retrieval-Scheme sous forme de 0x1F ou
- **en ce que** la signalisation de la variante de livraison respective est effectuée par une valeur définie pour le Champ d'en-tête X-Mms-Content-Location.

11. Procédé selon la revendication précédente, **caractérisé en ce que**
la nouvelle signalisation est appliquée dans les messages envoi d'émission de MMS et information du destinataire de MMS.

12. Procédé selon l'une quelconque des revendications 7 à 11, **caractérisé en ce que**
un codage du champ d'en-tête supplémentaire (X-Mms-Retrieval-Scheme) pour l'indication d'une variante de livraison est effectué par les valeurs suivantes :
- livraison retardée ou immédiate, comme spécification standard <octet 128>,
- livraison forcée et immédiate <octet 129>,
- livraison directe avec confirmation <Octet 130>,
- livraison directe sans confirmation <Octet 131> et/ou
- livraison retardée ou immédiate sans l'envoi de la confirmation d'information du destinataire <Octet 132>.

13. Procédé selon l'une quelconque des revendications précédentes, **caractérisé en ce que** l'unité de liaison de MMS (M-SR) insère une signalisation selon les revendications précédentes dans un Multimedia Message (MM).

14. Procédé selon les revendications précédentes, **caractérisé en ce que**
l'unité de liaison de MMS (M-SR) insère une signalisation en fonction du profil d'utilisateur du destinataire, des propriétés de l'application utilisateur de MMS réceptrice et du terminal d'abonné mobile et/ou en fonction du réseau, dans lequel le terminal d'abonné mobile est enregistré, dans l'information du destinataire de MMS.

15. Unité d'envoi pour la transmission de données sous la forme de données de texte et/ou de données d'image avec ou sans son, qui sont codées comme éléments d'une quantité de données à transmettre selon des standards identiques ou différents, comprenant un moyen pour la fixation d'un marquage d'un choix à partir de plusieurs variantes de la livraison d'un message, **caractérisée en ce que**
l'une des variantes de livraison suivantes est définie parallèlement à une livraison immédiate ou à une livraison retardée du message et est signalée à une application utilisateur de MMS réceptrice ;
- livraison forcée immédiate, lors de laquelle une livraison du message multimédia est ordonnée par une application utilisateur de MMS réceptrice immédiatement par l'envoi d'une demande de livraison de MMS à l'unité de liaison de MMS,
- livraison directe avec confirmation, lors de laquelle le message multimédia est délivré avec une information du destinataire de MMS et on répond par l'application utilisateur de MMS réceptrice à la réception de l'information du destinataire de MMS avec signalisation de cette variante de livraison avec une confirmation d'information du destinataire de MMS, ou
- livraison directe sans confirmation, lors de laquelle le message multimédia est délivré avec une information du destinataire de MMS.

16. Unité de liaison de MMS pour la transmission de données sous la forme de données de texte et/ou de données d'image avec ou sans son, qui sont codées comme éléments d'une quantité de données à transmettre selon des standards identiques ou différents, comprenant un moyen pour la fixation d'un marquage d'un choix à partir de plusieurs variantes de la livraison d'un message, **caractérisée en ce que**
parallèlement à une livraison immédiate ou à une livraison retardée du message, l'une des variantes d'envoi suivantes est définie et est signalée à une application utilisateur de MMS réceptrice :
- livraison forcée et immédiate, lors de laquelle une livraison du message multimédia est ordonnée par une application utilisateur de MMS réceptrice immédiatement par l'envoi d'une demande de livraison de MMS à l'unité de liaison de MMS,
- livraison directe avec confirmation, lors de laquelle le message multimédia est envoyé avec une information du destinataire de MMS et on répond par l'application utilisateur de MMS réceptrice à la réception de l'information du destinataire de MMS avec signalisation de cette variante de livraison avec une confirmation d'information du destinataire de MMS, ou
- livraison directe sans confirmation, lors de laquelle le message multimédia est délivré avec une information du destinataire de MMS.

17. Unité de réception pour la réception de données sous la forme de données de texte et/ou de données d'image avec ou sans son, qui sont codées comme éléments d'une quantité de données à transmettre selon des standards identiques ou différents, comprenant une application utilisateur de MMS réceptrice, qui est **caractérisée en ce que**
- lors d'une livraison forcée et immédiate un envoi d'une demande de livraison de MMS à une unité de liaison de MMS est ordonné immédiatement,
- lors d'une livraison forcée directe avec confirmation, lors de laquelle le message multimédia est envoyé avec une information du destinataire de MMS, on répond à la réception d'une information de destinataire de MMS avec la signalisation de cette variante de livraison avec une confirmation d'information du destinataire de MMS à une unité de liaison de MMS, ou
- lors d'une livraison directe sans confirmation, lors de laquelle le message multimédia est envoyé avec une information du destinataire de MMS, on ne répond pas à la réception d'une information du destinataire de MMS avec la signalisation de cette variante de livraison avec une confirmation de l'information du destinataire de MMS à une unité de liaison de MMS.

18. Unité d'émission et de réception selon l'une quelconque des revendications 15 ou 17, **caractérisée en ce que**
l'unité d'émission et de réception est conçue comme terminal d'abonné.

19. Unité d'émission et de réception selon la revendication 18, **caractérisée en ce que** le terminal d'abonné est conçu comme un téléphone mobile, en particulier selon le standard UMTS.

20. Produit de programme d'ordinateur qui comporte un support de stockage pouvant être lu sur l'ordinateur, sur lequel un programme est mémorisé, qui permet à une installation de traitement de données ou à un ordinateur, une fois qu'il a été chargé dans la mémoire de l'ordinateur, d'effectuer un marquage d'un élément dans le cadre de la transmission de données dans un système de communication et en particulier un réseau de téléphonie mobile aux données à transmettre après spécification par un expéditeur, afin de définir un choix à partir de plusieurs variantes de la livraison d'un message à un destinataire, l'une des variantes de livraison suivantes étant définie parallèlement à une livraison immédiate ou à une livraison retardée du message et étant signalée à une application utilisateur de MMS réceptrice,
- livraison forcée et immédiate, lors de laquelle une livraison du message multimédia est ordonnée par une application utilisateur de MMS réceptrice immédiatement par l'envoi d'une demande de livraison de MMS à l'unité de liaison de MMS,
- livraison directe avec confirmation, lors de laquelle le message multimédia est envoyé avec une information du destinataire de MMS et on répond par l'application utilisateur de MMS réceptrice à la réception de l'information du destinataire MMS avec signalisation de cette variante de livraison avec une confirmation d'information du destinataire de MMS, ou
- livraison directe sans confirmation, lors de laquelle le message multimédia est envoyé avec une information du destinataire de MMS.

21. Produit de programme informatique selon la revendication précédente, **caractérisé en ce que** le programme permet à l'installation de traitement de données ou à l'ordinateur de mettre en oeuvre un procédé selon l'une quelconque des revendications 1 à 14 en cas d'envoi de données dans un réseau de téléphonie mobile.

22. Système de communication, qui comporte une unité de réception selon l'une quelconque des revendications 17 à 19 et une unité de liaison de MMS (M-SR), **caractérisé en ce que**
l'unité de liaison de MMS présente un moyen pour la définition d'un marquage d'un choix à partir de plusieurs variantes de la livraison d'un message, l'une des variantes de livraison suivantes étant définie parallèlement à une livraison immédiate ou à une livraison retardée du message et étant signalée à une application utilisateur de MMS réceptrice :
- livraison forcée et immédiate, lors de laquelle une livraison du message multimédia est ordonnée par une application utilisateur de MMS réceptrice immédiatement par l'envoi d'une demande de livraison de MMS à l'unité de liaison de MMS,
- livraison directe avec confirmation, lors de laquelle le message multimédia est délivré avec une information du destinataire de MMS et on répond par l'application utilisateur de MMS réceptrice à la réception de l'information du destinataire de MMS avec signalisation de cette variante de livraison avec une confirmation d'information du destinataire de MMS, ou
- livraison directe sans confirmation, lors de laquelle le message multimédia est délivré avec une information du destinataire de MMS.

23. Système de communication selon la revendication 20, **caractérisé en ce que**
le système de communication comporte une unité d'émission selon l'une quelconque des revendications 15, 18 ou 19
et/ou un produit de programme d'ordinateur selon l'une quelconque des revendications 20 à 21 ou son utilisation est incluse.
